# EUROPÄISCHE PATENTSCHRIFT

(11) **EP 0 677 882 B1**
(45) Veröffentlichungstag und Bekanntmachung des Hinweises auf die Patenterteilung: **15.12.1999**
(21) Anmeldenummer: 95101521.3
(22) Anmeldetag: 04.02.1995
(51) Int. Cl.: H01M 8/06, C01B 3/00

(54) **Verfahren zur Erzeugung von elektrischer Energie aus regenerativer Biomasse**
Process for generating electrical energy from regenerative biomass
Procédé pour la génération d'énergie électrique à partir de biomasses régénérables

(30) Priorität: 12.04.1994 DE 4412155; 30.08.1994 DE 4430750
(43) Veröffentlichungstag der Anmeldung: 18.10.1995
(73) Patentinhaber: Binsmaier, Hannelore, geb. Gallin-Ast, D-85253 Erdweg-Grossberghofen (DE)
(72) Erfinder: Johnssen, Wolf Gerhard, Dr. Dipl.-Phys., D-80801 München (DE)
(74) Vertreter: Honke, Manfred, Dr.-Ing.

(56) Entgegenhaltungen:
- EP-A- 0 345 908
- EP-A- 0 564 796
- WO-A-95/15590
- DE-A- 1 592 278
- US-A- 4 988 580
- ENERGY BIOMASS WASTES, Bd. 9, Seiten 1343-1368, EDWARD I WAN 'TECHNICAL AND ECONOMIC ASSESMENT OF BIOMASS-BASED FUEL CELL POWER SYSTEMS'
- APPLIED ENERGY, Bd. 45, Nr. 3, Seiten 219-240, V. ALDERUCCI ET AL 'Potential Biomass Resources of Sicily for Electric-Power Generation'
- PATENT ABSTRACTS OF JAPAN vol. 17 no. 71 (E-1319) ,12.Februar 1993 & JP-A-04 274172 (TOSHIBA CORP) 30.September 1992,
- CHEMICAL ABSTRACTS, vol. 90, no. 22, 28.Mai 1979 Columbus, Ohio, US; abstract no. 171430c, HODAM, ROBERT H ET AL 'Small scale gasification of biomass to produce a low BTU gas' & SYMP. PAP: : ENERGY BIOMASS WASTES, Seiten 729-748,
- PATENT ABSTRACTS OF JAPAN vol. 014 no. 005 (E-869) ,9.Januar 1989 & JP-A-01 253168 (BABCOCK HITACHI KK) 9.Oktober 1989,

## Beschreibung

Die Erfindung betrifft ein Verfahren sowie ein System zur Erzeugung von elektrischer Energie aus regenerativer, aus Pflanzen erzeugter Biomasse, wobei in einem Reformer ein wasserstoffhaltiges Rohgas erzeugt wird, wobei in einer Rohgasaufbereitungsvorrichtung aus dem Rohgas ein Brennstoffreingas mit hohem Wasserstoffanteil gebildet wird und wobei in einem Verstromungsmodul mit PEM-Brennstoffzellen aus dem Brennstoffreingas elektrische Energie erzeugt wird. - Die Biomasse kann aus eigens zum Zwecke der Energieerzeugung angebauten Pflanzen erzeugt werden. Die Biomasse kann aber auch mit planzlichen Abfallstoffen gebildet werden. Die Bezeichnung "PEM" steht für "proton exchange membrane" und/oder für "polymer-electrolyte membrane", welches beides Synonyme sind. PEM-Brennstoffzellen weisen vom grundsätzlichen Aufbau her eine polymere Membran mit permeabelen katalytischen Elektroden auf beiden Seiten der Membran auf. Dadurch ist auf einer Seite der Membran die Kathode und auf der anderen Seite der Membran die Anode gebildet. Der Kathode und der Anode sind ein Kathodenraum und ein Anodenraum zugeordnet. Dem Anodenraum wird ein wasserstoffhaltiges Brennstoffgas zugeführt, wobei der Wasserstoff an der Anode zu Protonen oxidiert wird. Die Protonen haben in der Polymermembran eine hohe Beweglichkeit und wandern zur Kathode, wo z. B. dem Kathodenraum zugeführter Luftsauerstoff zu Wasser reduziert wird. Da die Polymermembran elektrisch isolierend ist, läßt sich aufgrund dieser chemischen Prozesse ein Gleichstrom von den Elektroden abnehmen, welcher gegebenenfalls in eine übliche Netz-Wechselspannung umgewandelt werden kann. Nähere Einzelheiten zu PEM-Brennstoffzellen sind beispielsweise dem US-Buch "Fuel Cells, a Hand-book", K. Chinoshita, Lawrence Berkeley Laboratory, Berkeley, Carlifornia, USA, 1988, Kapitel 6.2, entnehmbar.

Ein Verfahren und eine Vorrichtung der eingangs genannten Art sind aus der Literaturstelle "Department of Energy (DOE), November 1992, DE 93000009" bekannt. Bei dem insofern bekannten Verfahren wird zunächst aus der Biomasse Methanol hergestellt. Das Methanol wird dann in einem Reformer zu einem wasserstoffhaltigen Rohgas umgewandelt. In einer Rohgasaufbereitungsvorrichtung wird bei der Umwandlung gebildetes Kohlenmonoxid aus dem Rohgas entfernt, wobei keine weitere Nutzung des Kohlenmonoxids erfolgt. Das erhaltene insofern weitgehend kohlenmonoxidfreie Brennstoffreingas wird schließlich in den PEM-Brennstoffzellen verstromt. Nachteilig bei diesem bekannten Verfahren ist, daß aus der Biomasse zunächst auf aufwendige Weise Methanol gebildet werden muß, daß das Kohlenmonoxid trotz seines Brennwertes verloren wird und insbesondere, daß kein modularer Aufbau mit einer Abstimmung und Einstellung der Betriebsparameter unterschiedlicher Module aufeinander eingerichtet ist.

Durch die lediglich gemäß Artikel 54 (3) EPÜ zu berücksichtigende WO 95/15590 ist ein Modulkraftwerk zur primären Erzeugung von Wasserstoff aus Solarenergie bekannt geworden. Dieses Kraftwerk enthält in seinem grundsätzlichen Aufbau ein Umwandlungsmodul zur Umwandlung solarer Energie in Biomasse, ein Vergasungsmodul in Form eines Vergasungsreaktors und ein Speichermodul für den erzeugten Wasserstoff. In dem Umwandlungsmodul wird ein Brennstoffreingas mit im wesentlichen Wasserstoff und Wasserdampf aus dem Rohgas gebildet. Zu diesem Zweck weist das Umwandlungsmodul Eisenschwammreaktoren auf. Ferner findet sich ein Brennstoffzellenmodul, welches eine PEM-Brennstoffzelle zur Erzeugung elektrischer Energie aus dem Brennstoffreingas aufweist.

Der Erfindung liegt das technische Problem zugrunde ein Verfahren, welches den Energiegehalt der Biomasse besser ausnutzt und zuverlässig mit hoher Standzeit arbeitet, sowie ein System zur Durchführung dieses Verfahrens anzugeben.

Zur Lösung dieser Aufgabe lehrt die Erfindung ein Verfahren zur Erzeugung von elektrischer Energie aus regenerativer, aus Pflanzen erzeugter Biomasse, insbesondere aus Biomasse perennierender C₄-Pflanzen, wobei in einem Biomasse-Erzeugungsmodul Biomasse erzeugt wird, wobei in einem Reformermodul die Biomasse zu einem wasserstoffhaltigen Rohgas vergast wird, wobei in einem Rohgasaufbereitungsmodul aus dem Rohgas ein Brennstoffreingas mit hohem Wasserstoffanteil gebildet wird und wobei in einem Verstromungsmodul aus dem Brennstoffreingas elektrische Energie erzeugt wird, mit der folgenden Merkmalskombination:
a) mit dem Biomasse-Erzeugungsmodul wird durch geeignete Düngung der Pflanzen schwefelarme und chlorarme Biomasse erzeugt,
b) das Reformermodul arbeitet mit zumindest einem allothermen Reformer, wobei dem Reformer Wasserdampf als Vergasungsmittel zugeführt wird, wobei die Verweilzeit der Biomasse und/oder des Rohgases im Reformer sowie Druck und Temperatur im Reformer so eingestellt werden, daß biomassebürtige Alkaliverbindungen mit entstehender Asche aus dem Reformer abführbar sind und wobei sich als Zwischenprodukt bildender Teer in dem Reformer im wesentlichen zu Kohlenoxiden und Wasserstoff vergast wird,
c) in dem Rohgasaufbereitungsmodul wird ein Brennstoffreingas mit einem Gehalt an Kohlenoxiden von weniger als 1 % gebildet,
d) das Brennstoffreingas wird in dem Verstromungsmodul mittels zumindest einer PEM-Brennstoffzelle verstromt, wobei die Betriebstemperatur der PEM-Brennstoffzelle, der Wassergehalt des Brennstoffreingases und der Druck des Brennstoffreingases mit der Maßgabe einer hohen Leistungsdichte aufeinander abgestimmt werden.

C₄-Pflanzen sind Pflanzen, welche während der fotosynthetischen Umwandlung von Kohlendioxid vier Kohlenstoffatome binden. Perennierende Pflanzen sind Pflanzen, welche ein ausgeprägtes Wurzelwerk bilden und mehrjährig wachsen. Perennierende C₄-Pflanzen zeichnen sich dadurch aus, daß die Umwandlung von Kohlendioxid in Biomasse besonders effektiv erfolgt, daß der spezifische Ertrag besonders hoch ist und insbesondere daß weniger Düngung erforderlich ist. Letzterem kommt im Rahmen der Erfindung besondere Bedeutung zu, da sich aufgrund der geringen Düngemittelmengen störende Schwefel-, Chlor- und Alkaliverbindungen in der Biomasse erheblich reduzieren lassen. Ein Biomasse-Erzeugungsmodul ist eine landwirtschaftliche Anbaufläche, auf welcher die Biomasse unter Beachtung des Merkmals a) kultiviert wird. Vorteilhafterweise weist das Biomasse-Erzeugungsmodul eine Pelletierungseinrichtung auf. Als allotherm wird ein Reformer bezeichnet, welchem die für die Vergasungsreaktionen erforderliche Prozeßwärme von außen zugeführt wird. Die Verweilzeit der Biomasse und/oder des Rohgases im Reformer läßt sich unschwer einstellen durch Auswahl und Abstimmung der Anströmgeschwindigkeit des Wasserdampfes, des Betriebsdruckes, der Temperaturzonenverteilung sowie der Biomasse-Partikelgröße. Die optimale Abstimmung der Parameter gemäß Merkmal d) ist ebenfalls unschwer durch Versuche zu ermitteln. Eine höhere Betriebstemperatur der Brennstoffzelle erfordert einen höheren Wassergehalt im Brennstoffreingas um die Polymermembran ausreichend feucht zu halten. Hierdurch wiederum wird der Brennwert des Brennstoffreingases reduziert. Ein reduzierter Brennwert des Brennstoffreingases läßt sich durch eine Erhöhung des Drucks des Brennstoffreingases kompensieren. Die parametermäßige Abstimmung gemäß Merkmal d) kann aber auch unter Berücksichtigung des Kohlenmonoxidgehaltes des Brennstoffreingases erfolgen, sofern in den Grenzen des Merkmals c) nennenswerte Mengen an Kohlenmonoxid überhaupt entstehen. Die Leistungsdichte ist um so höher, je geringer der Kohlenmonoxidgehalt des Brennstoffreingases ist. Höhere Kohlenmonoxidgehalte lassen sich durch eine höhere Betriebstemperatur der Brennstoffzelle ausgleichen. Die Betriebstemperatur der Brennstoffzelle muß jedenfalls stets unter der Glastemperatur der Polymermembran bleiben.

In einer bevorzugten Ausführungsform des Verfahrens werden die Pflanzen ammoniumsulfatfrei und kaliumchloridfrei gedüngt. Hierdurch ist der Gehalt an Schwefel und Chlor in der Biomasse sehr gering. Auch der Kaliumgehalt ist reduzierbar, wenn auch nur in geringerem Umfang.

Im einzelnen ist der Reformer als Wirbelbettreaktor ausgebildet und wird bei einer Temperatur von 650 bis 900° C, vorzugsweise etwa 750° C, und einem Druck von 1,5 bis 5 bar, vorzugsweise etwa 3 bar, betrieben. Die Verweilzeit der Biomasse im Reformer wird so eingestellt, daß der Teergehalt des Rohgases unter 0,1 % liegt. Unter diesen Betriebsbedingungen ist das Rohgas praktisch frei von störendem Teer sowie von Alkaliverbindungen. Bei optimaler Betriebsweise des Reformers läßt sich der Teergehalt sogar auf unter 0,5 ppm reduzieren. Von besonderer Bedeutung hierfür ist, daß der bei der Biomassevergasung gebildete Teer sich hinsichtlich der quantitativen und qualitativen Zusammensetzung von bei der Kohlevergasung gebildeten Teer unterscheidet. Teer aus der Biomassevergasung läßt sich im Reforder offenbar leichter zerlegen bzw. vergasen. Zudem findet in dem Reformer und/oder in Leitungen des Reformermoduls keine Verschlackung oder Anbackung von Material aufgrund von Alkaliverbindungen statt. Sofern dennoch in geringstem Maße alkalihaltiger Feinstaub von dem Rohgas mitgeschleppt wird, kann dieser Feinstaub mittels einer Filtereinrichtung, z. B. eines Zyklonfilters, aus dem Rohgas abgeschieden werden.

In einer bevorzugten Ausführungsform der Erfindung wird in dem Reformer ein Rohgas mit etwa gleichen Volumenanteilen Wasserstoff und Kohlenmonoxid erzeugt durch Einstellung des Massenverhältnisses Dampf/Biomasse auf weniger als 0,3. Es kann aber auch mit einer Einstellung des Massenverhältnisses Dampf/Biomasse auf mehr als 1,3 gearbeitet werden. Dann beträgt das Wasserstoff/Kohlenmonoxid-Volumenverhältnis mehr als 3. Die Bildung des Brennstoffreingases erfolgt in beiden Fällen in dem Rohgasaufbereitungsmodul durch wechselweise Reduktion eines oxidierten Metallschwamms mittels des Rohgases und anschließender Oxidation des reduzierten Metallschwamms mittels Wasserdampf. Als Metallschwamm wird vorteilhafterweise Eisenschwamm verwendet. Ebenso kann jedoch mit anderen unedelen Metallen, beispielsweise Zink oder Mangan, gearbeitet werden. Bei der Reduktion des oxidierten Metallschwamms erfolgt die Reduktion durch Oxidation von Wasserstoff zu Wasser sowie von Kohlenmonoxid zu Kohlendioxid. Bei der Oxidation des reduzierten Metallschwamms mit Wasserdampf entsteht Wasserstoff. Im Ergebnis entsteht in diesem Ausführungsbeispiel ein Brennstoffreingas welches aus Wasserstoff und Wasserdampf besteht und ansonsten praktisch frei von anderen Bestandteilen ist. Der Wasserdampf stört im Brennstoffreingas grundsätzlich nicht, da beim Betrieb einer PEM-Brennstoffzelle ohnehin Wasser zur Aufrechterhaltung der Feuchtigkeit der Polymermembran zugeführt werden muß. Es versteht sich, daß der Wassergehalt des Brennstoffreingases gegebenenfalls durch Teilkondensation optimiert werden kann.

In einer anderen Ausführungsform wird in dem Reformer ein Rohgas mit einem Wasserstoff/Kohlenmonoxid-Volumenverhältnis von mehr als 3 erzeugt durch Einstellung des Massenverhältnisses Dampf/Biomasse auf mehr als 1,3, wobei die Bildung des Brennstoffreingases in dem Rohgasaufbereitungsmodul durch Anreicherung des Wasserstoffs auf zumindest 99 Vol.-% im Brennstoffreingas mittels der PSA-Methode mit zumindest 2 Adsorptionsreaktoren durchgeführt wird und wobei das Brennstoffreingas mit der zum dauerhaften Betrieb der PEM-Brennstoffzelle erforderlichen Menge an Wasserdampf versetzt wird. Die Bezeichnung "PSA" steht für "pressure swing adsorption." Bei der PSA-Methode wird ein erster Adsorptionsreaktor unter hohem Druck von dem Rohgas durchströmt. Dabei wird der Wasserstoff des Rohgases aufgrund seiner chemisch-physikalischen Eigenschaften erheblich schlechter adsorbiert als die weiteren, meist polaren Rohgasbestandteile. Im Ergebnis entströmt dem ersten Adsorptionsreaktor ein Brennstoffreingas mit dem angegebenen Wasserstoffanteil. Ein zweiter, zuvor in der soeben geschilderten Weise betriebener Adsorptionsreaktor wird in Gegenstromrichtung entspannt, wobei die unerwünschten adsorbierten Bestandteile des Rohgases ausströmen. Gegebenenfalls kann anschließend der zweite Adsorptionsreaktor gespült werden, beispielsweise mit Brennstoffreingas. Die Adsorptionsreaktoren sind vorzugsweise als Molekularsiebreaktoren ausgeführt. Da das Brennstoffreingas praktisch keine Bestandteile neben dem Wasserstoff enthält, ist es erforderlich Wasserdampf zuzusetzen um ein Austrocknen der Polymermembranen der PEM-Brennstoffzellen zu verhindern. Wird der Reformer gemäß diesem Ausführungsbeispiel betrieben, so ist bei 750° C und 3 bar ein Rohgas erzeugbar mit etwa 0,29 % Methan, etwa 18 % Kohlenmonoxid, etwa 20 % Kohlendioxid und etwa 62 % Wasserstoff. Selbst wenn sich im Reformer die Reaktionsgleichgewichte nicht einstellen, beträgt der Methangehalt in der Regel wenger als 7 % (Gasanteile verstehen sich stets als Vol.-%). Von besonderer Bedeutung ist hierbei der geringe Methananteil, wodurch eine gute Energieausbeute erzielt wird und wodurch auf eine aufwendige Methanabscheidung verzichtet werden kann. Sofern überhaupt noch erforderlich kann eine Methanabscheidevorrichtung einfacher Art und mit geringer Dimensionierung eingerichtet sein. Auch die Ausführungsform gemäß Patentanspruch 6 zeichnet sich durch einen besonders geringen Methananteil in dem Rohgas aus. Dieser beträgt nicht mehr als 7 Vol.-%, meist jedoch erheblich weniger.

Alle Ausführungsbeispiele des erfindungsgemäßen Verfahrens zeichnen sich dadurch aus, daß aufgrund des modularen Aufbaus sowie der Verbindung der Module zu einem System eine Steuerung bzw. Regelung der parametermäßigen Betriebsbedingungen der einzelnen Module so abgestimmt werden können, daß das System insgesamt optimal betrieben wird. Im einzelnen ist es ohne weiteres möglich Steuer- und Regelkreise zwischen dem Reformermodul und dem Rohgasaufbereitungsmodul einerseits und dem Rohgasaufbereitungsmodul und dem Verstromungsmodul andererseits einzurichten. Dadurch ist die Stromerzeugung in dem Verstromungsmodul regeltechnisch weitgehend von der Rohgaserzeugung im Reformermodul entkoppelt. Im Ausführungsbeispiel gemäß Patentanspruch 6 funktioniert dabei der Metallschwamm zusätzlich gleichsam als Zwischenspeicher. In dem Ausführungsbeispiel gemäß Anspruch 7 kann zum Zwecke der genannten regeltechnischen Entkopplung zusätzlich ein Wasserstoffspeicher üblicher Bauart im Rohgasaufbereitungsmodul vorgesehen sein. Im Ergebnis arbeitet das erfindungsgemäße Verfahren mit einem erheblich verbesserten Wirkungsgrad. Der Energiegehalt der Biomasse wird optimal ausgenutzt.

Gegenstand der Erfindung ist auch ein System zur Durchführung des erfindungsgemäßen Verfahrens gemäß Patentanspruch 9.

Im folgenden wird die Erfindung anhand von lediglich Ausführungsbeispiele darstellenden Zeichnungen näher erläutert. Es zeigen:
- **Fig. 1**: ein System zur Durchführung des erfindungsgemäßen Verfahrens mit Metallschwammreaktoren im Rohgasaufbereitungsmodul und
- **Fig. 2**: ein System zur Durchführung des erfindungsgemäßen Verfahrens mit Adsorptionsreaktoren im Rohgasaufbereitungsmodul.

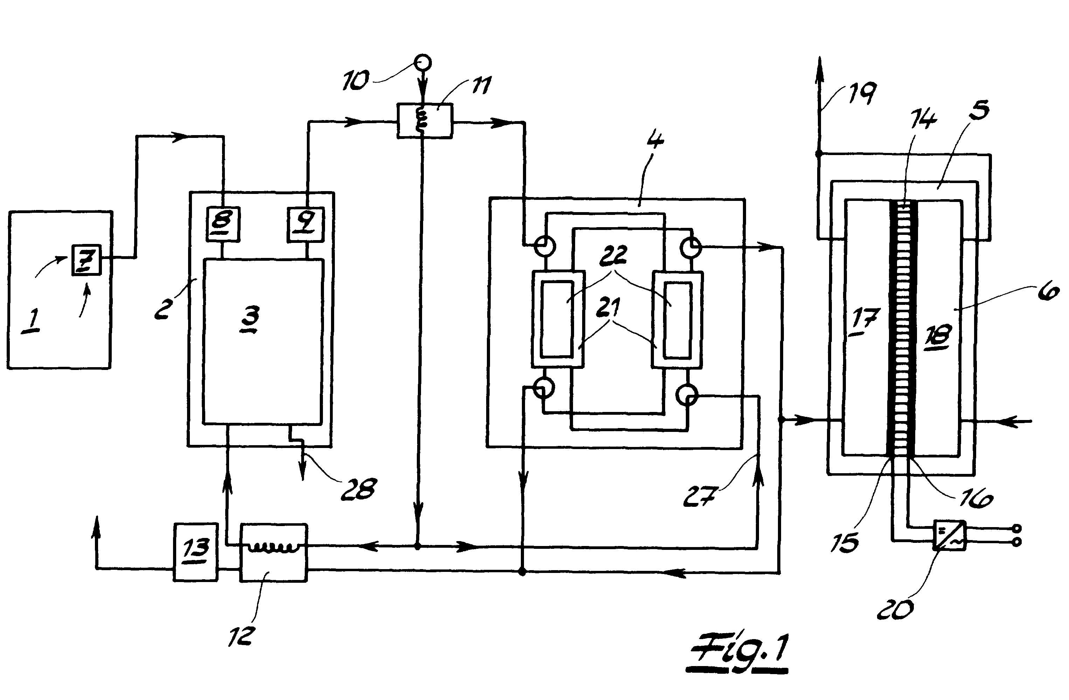

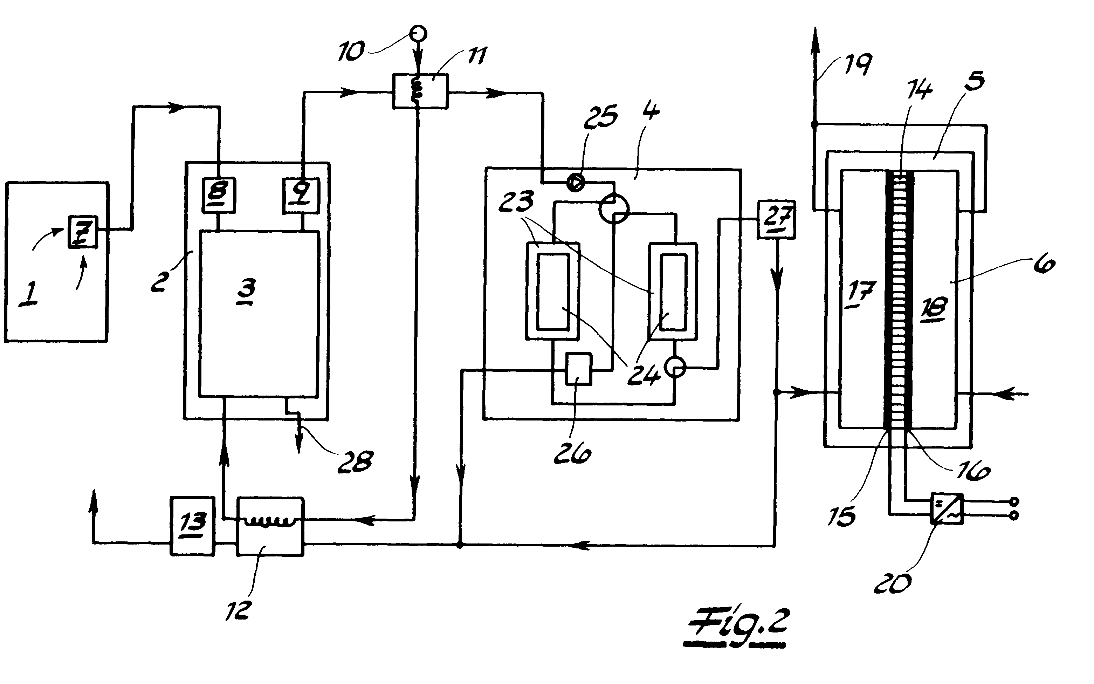

Das System zur Durchführung des erfindungsgemäßen Verfahrens gemäß der Fig. 1 und 2 weist vom grundsätzlichen Aufbau her ein Biomasse-Erzeugungsmodul 1, ein Reformermodul 2 mit zumindest einem allothermen Reformer 3, ein Rohgasaufbereitungsmodul 4 und ein Verstromungsmodul 5 mit zumindest einer PEM-Brennstoffzelle 6 auf. Im einzelnen ist im Rahmen des Biomasse-Erzeugungsmoduls 1 eine Pelletiereinrichtung 7 eingerichtet. Im Rahmen des Reformermoduls 2 sind zumindest eine Dosiereinrichtung 8 zur Dosierung der Biomasse und eine Filtereinrichtung 9 zur Abtrennung von Feinstaub aus dem Rohgas eingerichtet. Dem allothermen Reformer 3 wird über eine Wasserdampfzuführung 10 Wasserdampf in der für die optimale Vergasung der Biomasse erforderlichen Menge zugeführt. Dabei wird der Wasserdampf mittels Wärmetauscher 11 und 12 auf die erforderliche Temperatur gebracht. Der Wärmetauscher 11 wird mit der Wärme des Rohgases betrieben. Die Erhitzung des Wasserdampfes im Wärmetauscher 12 wird durch Verbrennung eines Teils des Brennstoffreingases und/oder des Abgases aus dem Rohgasaufbereitungsmodul 4 durchgeführt. Es versteht sich, daß das Abgas aus dieser Verbrennung ggf. in einer Abgasreinigung 13 umweltverträglich aufgearbeitet wird. Die Brennstoffzelle 6 weist im einzelnen eine Polymermembran 14 sowie eine Anode 15 und eine Kathode 16 auf. Das Brennstoffreingas wird im Anodenraum 17 über die Anode 15 geleitet. Bei der Kathode ist ein Kathodenraum 18 eingerichtet, durch welchen ein Oxidationsmittel, beispielsweise Luftsauerstoff, geleitet wird. Der Abgasleitung 19 des Verstromungsmoduls 5 entweicht Wasser bzw. Wasserdampf, welches praktisch frei von umweltschädlichen Schadstoffen ist. An die Anode 15 und Kathode 16 der Brennstoffzelle 6 ist ein Wechselrichter 20 zur Erzeugung von üblichem Netz-Wechselstrom angeschlossen.

In dem Ausführungsbeispiel Fig. 1 weist das Rohgasaufbereitungsmodul 4 zumindest zwei Metallschwammreaktoren 21 mit Metallschwämmen 22 auf. Im Ausführungsbeispiel sind die Metallschwämme 22 Eisenschwämme. Das Rohgasaufbereitungsmodul 4 ist über den Wasserdampfanschluß 27 an die Wasserdampfzufuhr 10 angeschlossen. Im einzelnen sind Leitungen und umschaltbare Ventile zur wechselweisen Oxidation bzw. Reduktion der beiden Metallschwammreaktoren in der schematisch angedeuteten Weise eingerichtet.

In dem Ausführungsbeispiel Fig. 2 weist das Rohgasaufbereitungsmodul 4 zumindest zwei Adsorptionsreaktoren 23 auf. Diese sind mit Molekularsieben 24 ausgerüstet. Weiterhin sind zumindest ein Verdichter 25 sowie eine Entspannvorrichtung 26 eingerichtet. Das dem Rohgasaufbereitungsmodul 4 entströmende Brennstoffreingas wird in einer Druckregel- und Befeuchtungsvorrichtung 27 auf den gewünschten Druck und gewünschten Wassergehalt eingestellt.

Das erfindungsgemäße Verfahren läßt sich mit beiden Ausführungsbeispielen eines Systems nach Fig. 1 oder Fig. 2 in der folgenden Weise durchführen. In dem Biomasse-Erzeugungsmodul 1 wird Biomasse durch Aufzucht von perennierenden C₄-Pflanzen erzeugt. Dabei werden die Pflanzen ammoniumsulfatfrei und kaliumchloridfrei gedüngt und die aus den Pflanzen erzeugbare Biomasse ist schwefelarm und chlorarm. Diese Biomasse wird in der Pelletiereinrichtung 7 zu Pellets geformt. Die insofern geformte Biomasse wird in einem Reformermodul 2 zu einem wasserstoffhaltigen Rohgas vergast. Das Reformermodul 2 arbeitet mit zumindest einem allothermen Reformer 3, wobei dem Reformer 3 Wasserdampf als Vergasungsmittel zugeführt wird. Die Verweilzeit der Biomasse und/oder des Rohgases im Reformer 3 sowie Druck und Temperatur im Reformer 3 werden so eingestellt, daß biomassebürtige Alkaliverbindungen mit entstehender Asche aus dem Reformer 3 abführbar sind und daß sich als Zwischenprodukt bildender Teer in dem Reformer 3 im wesentlichen zu Kohlenoxiden und Wasserstoff vergast wird. Die Asche wird über den Ascheabzug 28 aus dem Reformer 3 abgeführt.

Die Reformer 3 sind als Wirbelbettreaktoren ausgebildet und werden bei einer Temperatur von 750° C und einem Druck von etwa 3 bar betrieben. Im einzelnen wird die Verweilzeit der Biomasse im Reformer 3 so eingestellt, daß der Teergehalt des Rohgases unter 0,5 ppm liegt. Das entstandene Rohgas wird nach Abscheidung mitgeschleppten alkalihaltigen Feinstaubes in der Filtereinrichtung 9 dem Rohgasaufbereitungsmodul 4 zur Bildung eines Brennstoffreingases zugeführt. In dem Rohgasaufbereitungsmodul wird das Brennstoffreingas mit hohem Wasserstoffanteil und einem Gehalt an Kohlenoxiden von weniger als 5 ppm gebildet. Aus dem Brennstoffreingas wird in dem Verstromungsmodul 5 elektrische Energie erzeugt. Die Verstromung des Brennstoffreingases erfolgt im einzelnen mittels zumindest einer PEM-Brennstoffzelle 6, wobei die Betriebstemperatur der Brennstoffzelle 6, der Wassergehalt des Brennstoffreingases und der Druck des Brennstoffreingases mit der Maßgabe einer optimalen Leistungsdichte aufeinander abgestimmt werden.

Das System gemäß der Fig. 1 kann im einzelnen so betrieben werden, daß in dem Reformer 3 ein Rohgas mit etwa gleichen Anteilen Wasserstoff und Kohlenmonoxid erzeugt wird durch Einstellung des Massenverhältnisses Dampf/Biomasse auf weniger als 0,3. Aus diesem Rohgas wird das Brennstoffreingas in dem Rohgasaufbereitungsmodul 4 durch wechselweise Reduktion eines oxidierten Metallschwamms 22 mittels des Rohgases und anschließender Oxidation des reduzierten Metallschwamms 22 mittels Wasserdampf durchgeführt. Diese Betriebsweise ist energetisch besonders vorteilhaft, unter anderem, da wenig Dampf benötigt wird.

In dem System gemäß der Fig. 2 wird in dem Reformer 3 ein Rohgas mit einem Wasserstoff/Kohlenmonoxidverhältnis von mehr als 3 erzeugt durch Einstellung des Massenverhältnisses Dampf/Biomasse auf mehr als 1,5, wobei die Bildung des Brennstoffreingases in dem Rohgasaufbereitungsmodul 4 durch Anreicherung des Wasserstoffs auf zumindest 99 Vol.-% im Brennstoffreingas mittels der PSA-Methode mit zumindest zwei Adsorptionsreaktoren 23 durchgeführt wird. Die PSA-Methode läßt sich so durchführen, daß der Wasserstoff auf 99,9 Vol.-% und mehr angereichert wird. In der Druckregel- und Befeuchtungseinrichtung 27 wird das Brennstoffreingas mit der zum dauerhaften Betrieb der PEM-Brennstoffzelle 6 erforderlichen Menge an Wasserdampf versetzt.

## Patentansprüche

1. Verfahren zur Erzeugung von elektrischer Energie aus regenerativer, aus Pflanzen erzeugter Biomasse, insbesondere aus Biomasse perennierender C4-Pflanzen, wobei in einem Biomasse-Erzeugungsmodul (1) Biomasse erzeugt wird, wobei in einem Reformermodul (2) die Biomasse zu einem wasserstoffhaltigen Rohgas vergast wird, wobei in einem Rohgasaufbereitungsmodul (4) aus dem Rohgas ein Brennstoffreingas mit hohem Wasserstoffanteil gebildet wird und wobei in einem Verstromungsmodul (5) aus dem Brennstoffreingas elektrische Energie erzeugt wird, mit der folgenden Merkmalskombination:
a) mit dem Biomasse-Erzeugungsmodul (1) wird durch geeignete Düngung der Pflanzen schwefel arme und chlorarme Biomasse erzeugt,
b) das Reformermodul (2) arbeitet mit zumindest einem allothermen Reformer (3), wobei dem Reformer (3) Wasserdampf als Vergasungsmittel zugeführt wird, wobei die Verweilzeit der Biomasse und/oder des Rohgases im Reformer (3) sowie Druck und Temperatur im Reformer (3) so eingestellt werden, daß biomassebürtige Alkaliverbindungen mit entstehender Asche aus dem Reformer (3) abführbar sind, und wobei sich als Zwischenprodukt bildender Teer in dem Reformer (3) im wesentlichen zu Kohlenoxiden und Wasserstoff vergast wird,
c) in dem Rohgasaufbereitungsmodul (4) wird ein Brennstoffreingas mit einem Gehalt an Kohlenoxiden von weniger als 1 % gebildet,
d) das Brennstoffreingas wird in dem Verstromungsmodul (5) mittels zumindest einer PEM-Brennstoffzelle (6) verstromt, wobei die Betriebstemperatur der PEM-Brennstoffzelle (6), der Wassergehalt des Brennstoffreingases und der Druck des Brennstoffreingases mit der Maßgabe einer hohen Leistungsdichte aufeinander abgestimmt werden.

2. Verfahren nach Anspruch 1, wobei die Pflanzen ammoniumsulfatfrei und kaliumchloridfrei gedüngt werden.

3. Verfahren nach Anspruch 1 oder 2, wobei der Reformer (3) als Wirbelbettreaktor ausgebildet ist und bei einer Temperatur von 650 bis 900° C, vorzugsweise etwa 750°C, und einem Druck von 1,5 bis 5 bar, vorzugsweise etwa 3 bar, betrieben wird.

4. Verfahren nach einem der Ansprüche 1 bis 3, wobei die Verweilzeit der Biomasse im Reformer (3) so eingestellt wird, daß der Teergehalt des Rohgases unter 0,1 % liegt.

5. Verfahren nach einem der Ansprüche 1 bis 4, wobei im Rohgas mitgeschleppter alkalihaltiger Feinstaub mittels einer Filtereinrichtung (9) aus dem Rohgas abgeschieden wird.

6. Verfahren nach einem der Ansprüche 1 bis 5, wobei in dem Reformer (3) ein Rohgas mit etwa gleichen Volumenanteilen Wasserstoff und Kohlenmonoxid erzeugt wird durch Einstellung des Massenverhältnisses Dampf/Biomasse auf weniger als 0,3 und wobei die Bildung des Brennstoffreingases in dem Rohgasaufbereitungsmodul (4) durch wechselweise Reduktion eines oxidierten Metallschwamms (22) mittels des Rohgases und anschließender Oxidation des reduzierten Metallschwamms (22) mittels Wasserdampf erfolgt.

7. Verfahren nach einem der Ansprüche 1 bis 5, wobei in dem Reformer (3) ein Rohgas mit einem Wasserstoff/KohlenmonoxidVolumenverhältnis von mehr als 3 erzeugt wird durch Einstellung des Massenverhältnisses Dampf/Biomasse auf mehr als 1,3 und wobei die Bildung des Brennstoffreingases in dem Rohgasaufbereitungsmodul (4) durch wechselweise Reduktion eines oxidierten Metallschwamms (22) mittels des Rohgases und anschließender Oxidation des reduzierten Metallschwamms (22) mittels Wasserdampf erfolgt.

8. Verfahren nach einem der Ansprüche 1 bis 5, wobei in dem Reformer (3) ein Rohgas mit einem Wasserstoff/KohlenmonoxidVolumenverhältnis von mehr als 3 erzeugt wird durch Einstellung des Massenverhältnisses Dampf/Biomasse auf mehr als 1,3, wobei die Bildung des Brennstoffreingases in dem Rohgasaufbereitungsmodul (4) durch Anreicherung des Wasserstoffs auf zumindest 99 Vol.-% im Brennstoffreingas mittels der PSA-Methode mit zumindest 2 Adsorptionsreaktoren (23) durchgeführt wird und wobei das Brennstoffreingas mit der zum dauerhaften Betrieb der PEM-Brennstoffzelle (6) erforderlichen Menge an Wasserdampf versetzt wird.

9. Vorrichtung zur Durchführung des Verfahrens nach Anspruch 8, mit einem Biomasse-Erzeugungsmodul (1) zur Erzeugung von Biomasse, mit einem Reformermodul (2) zur Vergasung der Biomasse mit Wasserdampf zu einem wasserstoffhaltigen Rohgas, mit einem Rohgasaufbereitungsmodul (4) zur Bildung eines Brennstoffreingases mit zumindest 99 Vol.-% Wasserstoff aus dem Rohgas, wobei das Rohgasaufbereitungsmodul (4) mit zumindest zwei Adsorptionsreaktoren (23), vorzugsweise Molekularsiebreaktoren, mit zumindest einem Verdichter (25) sowie mit Leitungen, umschaltbaren Ventilen und Entspannvorrichtung (26) zur wechselweisen Reinigung des Rohgases in einem der Adsorptionsreaktoren (23) unter Druck bzw. zur Spülung des anderen Adsorptionsreaktors (23) durch Entspannung, sowie mit einem Verstromungsmodul (5) mit zumindest einer PEM-Brennstoffzelle (6) zur Erzeugung elektrischer Energie aus dem Brennstoffreingas, wobei der Brennstoffzelle (6) eine Brennstoffreingasbefeuchtungseinrichtung (27) vorgeschaltet ist.

## Claims

1. A process for the generation of electrical energy from regenerative biomass produced from plants, particularly from biomass of perennial C4 plants, wherein biomass is produced in a biomass generation module (1), wherein the biomass is gasified in a reformer module (2) to form a hydrogen-containing crude gas, wherein a clean fuel gas with a high content of hydrogen is produced from the crude gas in a crude gas treatment module (4), and wherein electrical energy is generated from the clean fuel gas in a conversion module (5), having the following combination of features:
a) biomass which is low in sulphur and low in chlorine is produced by the biomass generation module (1) by suitable fertilisation of plants,
b) the reformer module (2) comprises at least one allothermic reformer (3), wherein steam is fed as a gasifying medium to the reformer (3), wherein the dwell time of the biomass and/or of the crude gas in the reformer (3), as well as the pressure and temperature in the reformer (3), are adjusted so that alkali compounds originating from the biomass can be discharged from the reformer (3) with the ash formed, and wherein tar, which is formed as an intermediate, is substantially gasified in the reformer (3) to form carbon oxides and hydrogen,
c) a clean fuel gas with a content of carbon oxides of less than 1 % is formed in the crude gas treatment module (4),
d) the clean fuel gas is converted in the conversion module (5) by means of at least one PEM fuel cell (6), wherein the operating temperature of the PEM fuel cell (6), the water content of the clean fuel gas and the pressure of the clean fuel gas are matched to each other in accordance with a high power density.

2. A process according to claim 1, wherein the plants are fertilised free from ammonium - sulphate and free from potassium chloride.

3. A process according to claims 1 or 2, wherein the reformer (3) is constructed as a fluidised bed reactor and is operated at a temperature from 650 to 900°C, preferably at about 750°C, and at a pressure from 1.5 to 5 bar, preferably at about 3 bar.

4. A process according to any one of claims 1 to 3, wherein the dwell time of the biomass in the reformer (3) is adjusted so that the tar content of the crude gas is less than 0.1 %.

5. A process according to any one of claims 1 to 4, wherein fine, alkali-containing dust which is entrained in the crude gas is separated from the crude gas by means of a filter device (9).

6. A process according to any one of claims 1 to 5, wherein a crude gas with approximately equal volume fractions of hydrogen and carbon monoxide is produced in the reformer (3) by adjusting the steam/biomass mass ratio to less than 0.3, and wherein the formation of clean fuel gas in the crude gas treatment module (4) is effected by an alternating procedure comprising the reduction of an oxidised metal sponge (22) by means of the crude gas and subsequent oxidation of the reduced metal sponge (22) by means of steam.

7. A process according to any one of claims 1 to 5, wherein a crude gas with a hydrogen/carbon monoxide ratio by volume which is higher than 3 is produced in the reformer (3) by adjusting the steam/biomass mass ratio to a value higher than 1.3, and wherein the formation of clean fuel gas in the crude gas treatment module (4) is effected by an alternating procedure comprising the reduction of an oxidised metal sponge (22) by means of the crude gas and subsequent oxidation of the reduced metal sponge (22) by means of steam.

8. A process according to any one of claims 1 to 5, wherein a crude gas with a hydrogen/carbon monoxide ratio by volume which is higher than 3 is produced in the reformer (3) by adjusting the steam/biomass mass ratio to a value higher than 1.3, wherein the clean fuel gas is formed in the crude gas treatment module (4) by concentrating the hydrogen to at least 99 % by volume in the clean fuel gas by means of the PSA method using at least 2 adsorption reactors (23), and wherein the clean fuel gas is mixed with the amount of steam which is necessary for permanent operation of the PEM fuel cell (6).

9. An apparatus for carrying out the process according to claim 8. comprising a biomass production module (1) for the production of biomass, comprising a reformer module (2) for the gasification of the biomass with steam to form a hydrogen-containing crude gas, comprising a crude gas treatment module (4) for the formation of a clean fuel gas, which contains at least 99 % by volume of hydrogen, from the crude gas. wherein the crude gas treatment module (4) is equipped with at least two adsorption reactors (23), preferably molecular sieve reactors, and with at least one compressor (25), and is equipped with lines, change-over valves and a depressurising device (26) for alternately purifying the crude gas in one of the adsorption reactors (23) under pressure or flushing the other adsorption reactor (23) by depressurisation. said apparatus also comprising a conversion module (5) having at least one PEM fuel cell (6) for the generation of electrical energy from the clean fuel gas, wherein a clean fuel gas humidification device (27) is connected upstream of the fuel cell (6).

## Revendications

1. Procédé de production d'énergie électrique à partir d'une biomasse renouvelable, produite à partir de plantes, notamment à partir d'une biomasse de plantes vivaces au C4, dans lequel une biomasse est produite dans un module (1) de production de biomasse, dans lequel la biomasse est transformée en un gaz brut contenant de l'hydrogène dans un module reformeur (2), dans lequel il est formé un gaz combustible pur à forte teneur en hydrogène, dans un module (4) de traitement du gaz brut et dans lequel de l'énergie électrique est produite à partir du gaz combustible pur, dans un module (5) de production d'électricité, présentant la combinaison des caractéristiques suivantes :
a) avec le module (1) de production de biomasse, il est produit une biomasse à faible teneur en soufre et en chlore, par engraissage approprié des plantes,
b) le module reformeur (2) fonctionne avec au moins un reformeur allotherme (3), le reformeur (3) étant alimenté en vapeur d'eau servant d'agent de gazéification, le temps de séjour de la biomasse et/ou du gaz brut dans le reformeur (3) ainsi que la pression et la température régnant dans le reformeur (3) étant réglés de manière que les composés alcalins se formant de la biomasse avec formation de cendres puissent être extraits du reformeur (3), et le goudron qui se forme dans le reformeur (3) en tant que produit intermédiaire soit gazéifié pour l'essentiel en oxydes de carbone et hydrogène,
c) dans le module (4) de traitement du gaz brut est formé un gaz combustible pur d'une teneur en oxydes de carbone inférieure à 1 %,
d) le gaz combustible pur est transformé en électricité dans le module (5) de transformation en électricité, au moyen d'au moins une pile combustible photoélectromagnétique (6), la température de service de la pile combustible photoélectromagnétique (6), la teneur en eau du gaz combustible pur et sa pression étant adaptées les unes aux autres en vue d'obtenir une puissance volumique élevée.

2. Procédé selon la revendication 1 dans lequel les plantes sont engraissées sans sulfate d'ammonium ni chlorure de potassium.

3. Procédé selon la revendication 1 ou 2, dans lequel le reformeur (3) est réalisé sous la forme d'un réacteur à lit fluidisé et fonctionne à une température de 650 à 900 °C, de préférence à environ 750 °C, et sous une pression de 1,5 à 5 bars, de préférence d'environ 3 bars.

4. Procédé selon l'une des revendications 1 à 3, dans lequel le temps de séjour de la biomasse dans le reformeur (3) est réglé de manière que la teneur en goudron du gaz brut soit inférieure à 0,1 %.

5. Procédé selon l'une des revendications 1 à 4, dans lequel la poussière fine alcaline, transportée dans le gaz brut, est séparée du gaz brut au moyen d'un dispositif de filtrage (9).

6. Procédé selon l'une des revendications 1 à 5, dans lequel un gaz brut contenant à peu près la même proportion en volume d'hydrogène et d'oxyde de carbone est produit dans le reformeur (3), par réglage du rapport en masse vapeur/biomasse sur moins de 0,3 et dans lequel la formation du gaz combustible pur s'effectue dans le module (4) de traitement du gaz brut, alternativement par réduction d'une éponge métallique (22) oxydée au moyen du gaz brut, puis par oxydation de l'éponge métallique (22) réduite au moyen de vapeur d'eau.

7. Procédé selon l'une des revendications 1 à 5, dans lequel un gaz brut présentant un rapport en volume hydrogène/oxyde de carbone supérieur à 3 est produit par réglage du rapport en masse vapeur/biomasse sur plus de 1,3 et dans lequel la formation du gaz combustible pur s'effectue dans le module (4) de traitement du gaz brut, alternativement par réduction d'une éponge métallique (22) oxydée au moyen du gaz brut, puis par oxydation de l'éponge métallique (22) réduite au moyen de vapeur d'eau.

8. Procédé selon l'une des revendications 1 à 5, dans lequel un gaz brut présentant un rapport en volume hydrogène/oxyde de carbone supérieur à 3 est produit par réglage du rapport en masse vapeur/biomasse sur plus de 1,3, dans lequel la formation du gaz combustible pur est réalisée dans le module (4) de traitement du gaz brut par enrichissement en hydrogène pour obtenir une teneur au moins égale à 99 % en volume dans le gaz combustible pur, par la méthode à l'anhydride phtalique avec au moins 2 réacteurs à adsorption (23), et dans lequel on ajoute au gaz combustible pur la quantité de vapeur d'eau nécessaire pour le fonctionnement durable de la pile combustible photoélectromagnétique.

9. Dispositif pour la mise en oeuvre du procédé selon la revendication 8, comportant un module (1) de production de biomasse pour la production de biomasses, comportant un module reformeur (2) pour la transformation de la biomasse en un gaz brut contenant de l'hydrogène, au moyen de vapeur d'eau, comportant un module (4) de traitement du gaz brut pour former un gaz combustible pur contenant au moins 99 % en volume d'hydrogène, à partir du gaz brut, le module (4) de traitement du gaz brut étant équipé d'au moins deux réacteurs à adsorption (23), de préférence des réacteurs à filtre moléculaire, d'au moins un compresseur (25) ainsi que de conduites, de vannes commutables et d'un dispositif de détente (26) alternativement pour l'épuration du gaz brut dans l'un des réacteurs à adsorption (23) sous pression et pour le lavage de l'autre réacteur à adsorption (23) par détente, ainsi que d'un module (5) de production d'électricité avec au moins une pile combustible photoélectromagnétique (6) pour la production d'énergie électrique à partir du gaz combustible pur, un dispositif d'humidification (7) du gaz combustible pur étant monté en amont de la pile combustible (6).
